# EUROPEAN PATENT APPLICATION

(11) **EP 4 730 873 A1**
(43) Date of publication of application: **22.04.2026**
(21) Application number: 23941653.0
(22) Date of filing: 16.06.2023
(51) Int. Cl.: H04W 52/02

(54) **TERMINAL AND COMMUNICATION METHOD**

(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP)
(74) Representative: Hoffmann Eitle
(86) International application number: PCT/JP2023/022490
(87) International publication number: WO 2024/257354

(57) **Abstract**

A terminal includes: a reception unit configured to receive, from a base station, control information related to a cell discontinuous transmission and reception function for activating or deactivating a transceiver unit; and a control unit configured to perform transmission to and reception from the base station, based on the control information related to the cell discontinuous transmission and reception function. The reception unit receives a DCI (Downlink Control Information) format from the base station, and the control unit activates or deactivates the cell discontinuous transmission and reception function, based on at least one of a plurality of blocks included in the DCI format.

## Description

### TECHNICAL FIELD

The present invention relates to a terminal and a communication method in a wireless communication system.

### BACKGROUND ART

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Literature 1).

In addition, in the 3GPP (registered trademark) Release 18, in order to achieve environmental sustainability, carbon neutrality, SDGs (Sustainable Development Goals), operation cost reduction, and the like, the importance of network energy savings is increased and energy saving methods are being discussed (For example, Non-Patent Literature 2).

### CITATION LIST

### Non-Patent Literature

Non-Patent Literature 1: 3GPP TS 38.300 V17.3.0 (2022-12)
Non-Patent Literature 2: "New WID: Network energy savings for NR", RP-223540, 3GPP TSG RAN Meeting #98-e, December, 2022
Non-Patent Literature 3: 3GPP TS 38.331 V17.3.0 (2022-12)
Non-Patent Literature 4: 3GPP TS 38.212 V17.4.0 (2022-12)

### SUMMARY OF INVENTION

### TECHNICAL PROBLEM

In order to achieve carbon neutrality and SDGs, it is increasingly important to reduce energy consumption of base stations and discussions are being held with respect to implementation of discontinuous transmission and reception in the base stations. In a case where discontinuous transmission and reception by the base station is activated or deactivated, a format of control information for indicating to the terminal needs to be defined, for example.

The present invention has been made in view of the above-described points and is intended to indicate, to the terminal, control information related to discontinuous transmission and reception by the base station.

### SOLUTION TO PROBLEM

According to the disclosed technique, a terminal is provided. The terminal includes: a reception unit configured to receive, from a base station, control information related to a cell discontinuous transmission and reception function for activating or deactivating a transceiver unit; and a control unit configured to perform transmission to and reception from the base station, based on the control information related to a cell discontinuous transmission and reception function. The reception unit receives a DCI (Downlink Control Information) format from the base station, and the control unit activates or deactivates the cell discontinuous transmission and reception function, based on at least one of a plurality of blocks included in the DCI format.

### ADVANTAGEOUS EFFECTS OF INVENTION

According to the disclosed technique, a technique of indicating, to the terminal, control information related to discontinuous transmission and reception by the base station is provided.

### BRIEF DESCRIPTION OF DRAWINGS

[Fig. 1] is a drawing for describing a wireless communication system related to an embodiment of the present invention.
[Fig. 2] is a drawing for describing CDRX in NR Release 15.
[Fig. 3] is a drawing for describing WUS in NR Release 16.
[Fig. 4] is a drawing for describing the discontinuous reception of a base station related to Embodiment 1 of the present invention.
[Fig. 5] is a drawing for describing each parameter related to Embodiment 1 of the present invention.
[Fig. 6] is a drawing for describing the discontinuous transmission of a base station related to Embodiment 5 of the present invention.
[Fig. 7] is a drawing for describing each parameter related to Embodiment 5 of the present invention.
[Fig. 8] is a flowchart for describing an example of the cell DTX/DRX related to Embodiment 9 of the present invention.
[Fig. 9] is a drawing illustrating an example of a functional structure of a base station related to an embodiment of the present invention.
[Fig. 10] is a drawing illustrating an example of a functional structure of a terminal related to an embodiment of the present invention.
[Fig. 11] is a drawing illustrating an example of a hardware structure of the base station or the terminal related to an embodiment of the present invention.
[Fig. 12] is a drawing illustrating an example of a structure of a vehicle related to an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, for example, the conventional NR or LTE, but are not limited to the conventional NR or LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression of a radio parameter being "configured" may mean that a predetermined value is pre-configured, or may mean that a radio parameter indicated by the base station or the terminal is configured.

### (System configuration)

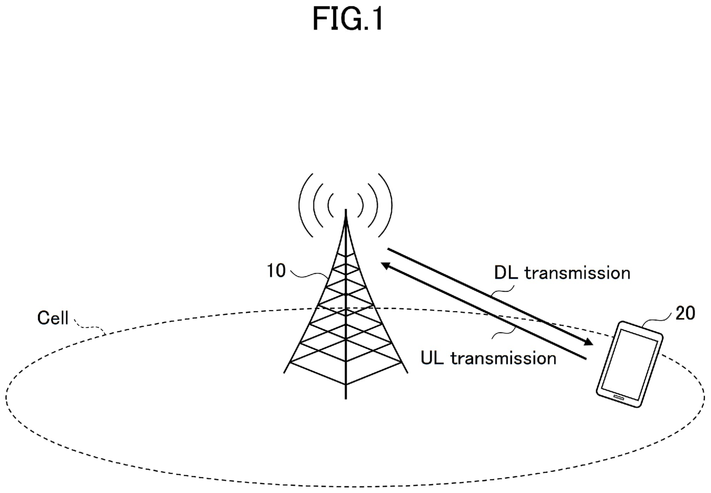

Fig. 1 is a drawing for describing a wireless communication system related to an embodiment of the present invention. As illustrated in Fig. 1, the wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. It is to be noted that the terminal 20 may be referred to as a UE, and the base station 10 may be referred to as a gNB.

Next, the technical discussions on the energy saving of a base station in NR Release 18 will be described. A method for base stations and terminals is being discussed in order to improve the network energy saving from an aspect of both transmission and reception in base stations. A method of more efficiently achieving the dynamic and/or semi-static and finer granularity adaptation of transmission and/or reception in one or more of the network energy saving techniques in the time domain, frequency domain, spatial domain, and power domain by causing base stations to use the potential support/feedback and the potential assistance information from terminals is being discussed.

Next, the conventional discontinuous reception (DRX) by a terminal or the connected mode DRX (CDRX: Conneced Mode Discontinuous Reception) will be described.

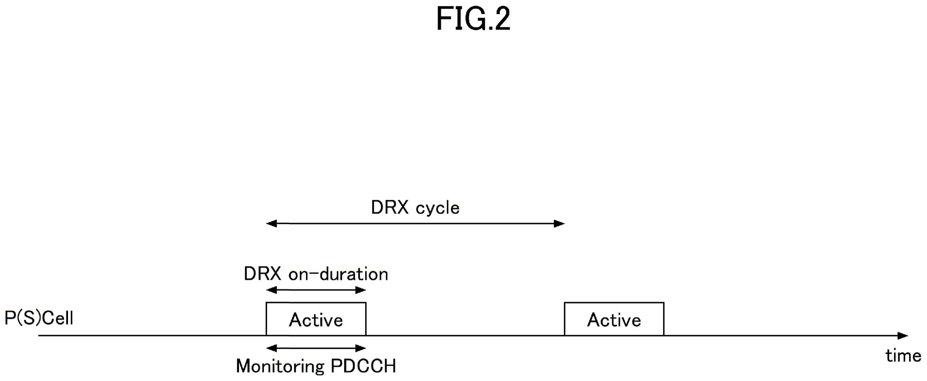

Fig. 2 is a drawing for describing CDRX in NR Release 15. In the CDRX operation of NR Release 15, the terminal monitors PDCCH within the DRX on-duration.

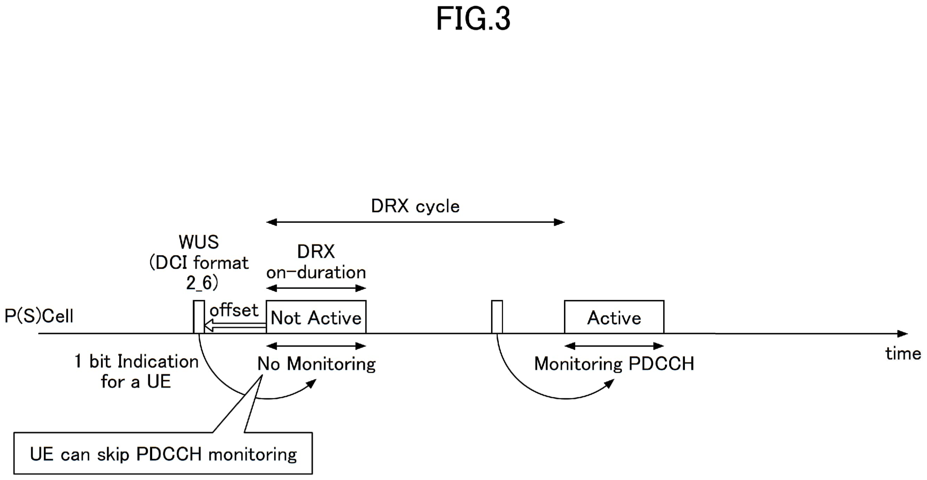

Fig. 3 is a drawing for describing WUS in NR Release 16. In NR Release 16, the PDCCH-based wake up signal (WUS) can indicate, to one or more terminals, whether or not PDCCH is to be monitored by the terminals within the subsequent DRX on-duration.

The DCI format 2_6 in which CRC (Cyclic Redundancy Check) is scrambled by PS-RNTI (Power Saving - Radio Network Temporary Identifier) is used as a PDCCH-based WUS, and is referred to as DCP (DCI with CRC scrambled by PS-RNTI).

The WUS monitoring occasion is configured by an offset from the on-duration based on the terminal function. In a case where the WUS indicates "inactive" (that is, in a case where there is no data to be transmitted or received by the terminal), the terminal can skip monitoring during the on-duration and can immediately transition to the sleep mode. In addition, a default terminal operation can be configured for a case in which the PDCCH-based WUS is not detected due to a detection error, for example.

DCI format 2_6 includes a one-bit wake-up indication information indicating "active" or "inactive".

### (Problem of conventional technique)

Next, the problem of the conventional technique will be described. In order to achieve carbon neutrality and SDGs, it is increasingly important to reduce energy consumption of base stations. However, there is a problem that the method of saving power consumption of base stations has not been standardized in the conventional technology.

### (Embodiment overview 1)

Therefore, in an embodiment of the present invention, an example will be described in which the reduction of power consumption of base stations is achieved from an aspect of the time domain. Hereinafter, Embodiment 1 to Embodiment 4 will be described as specific embodiments of the present invention.

### (Embodiment 1)

In this embodiment, an operation for a case in which base stations perform discontinuous reception and definitions of related concepts will be described.

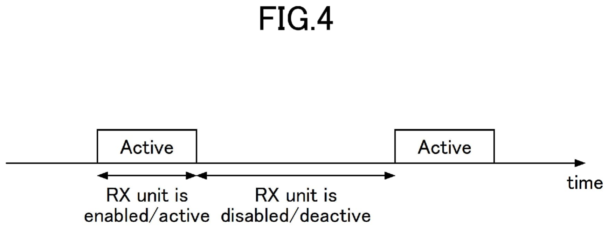

Fig. 4 is a drawing for describing the discontinuous reception of a base station related to an embodiment 1 of the present invention. The duration in which the base station 10 activates/deactivates the receiver unit is introduced as a discontinuous reception function by the base station (gNB CDRX) (hereinafter, referred to as the base station discontinuous reception).

The concept of the discontinuous reception by the base station 10 is similar to that of the discontinuous reception by the terminal 20. The receiver unit to be deactivated and/or parameters may be specified for each port, each panel, each beam, or each carrier (or cell).

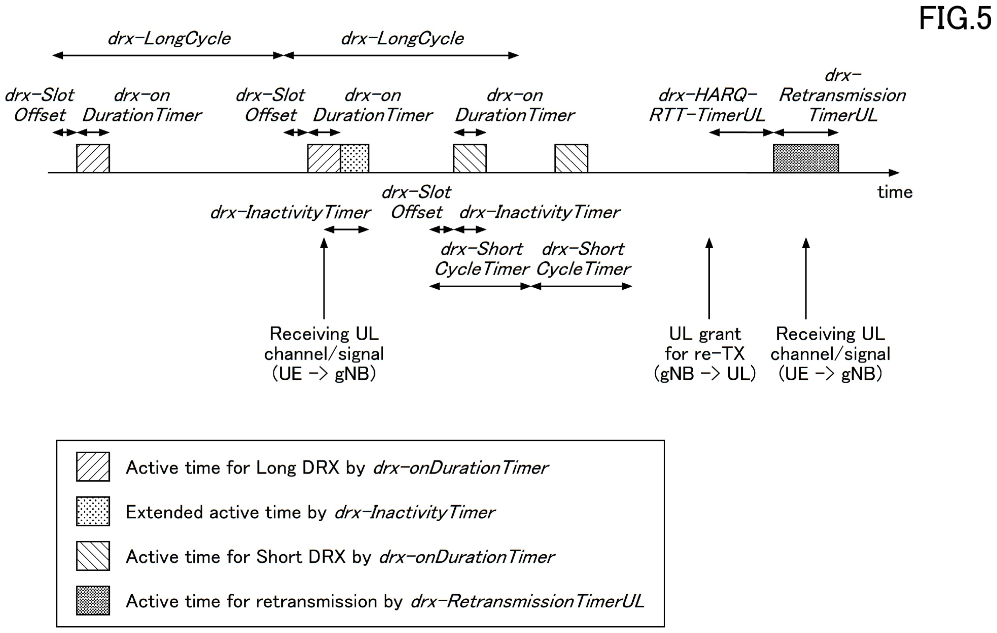

Fig. 5 is a drawing for describing each parameter related to Embodiment 1 of the present invention. The base station CDRX may be defined according to a plurality of parameters listed below. It is to be noted that the unit of parameters may be a symbol, a slot, a subframe, a millisecond, or a second. The unit may be different or the same between parameters.
- drx-onDurationTimer: the duration at the beginning of a DRX cycle
- drx-SlotOffset: the delay before starting drx-onDurationTimer
- drx-InactivityTimer: the duration after the uplink reception occasion in which the terminal 20 performs uplink transmission
- drx-LongCycleStartOffset: the long DRX cycle (that is, drx-LongCycle) and drx-StartOffset that define when the long DRX cycle and the short DRX cycle start
- drx-ShortCycle: the short DRX cycle
- drx-ShortCycleTimer: the duration during which the base station 10 follows the short DRX cycle
- drx-RetransmissionTimerUL: the maximum duration until a grant for uplink retransmission is received
- drx-HARQ-RTT-TimerUL: the minimum duration before an uplink retransmission grant is expected

In a case where the base station discontinuous reception is activated, the base station 10 may receive an uplink channel transmitted from the terminal 20 when drx-onDurationTimer, drx-InactivityTimer, or drx-RetransmissionTimerUL is running.

In a case where the base station discontinuous reception is activated, the terminal 20 may perform an operation of one of the following options.

### <Option 1>

The terminal 20 may perform an operation by assuming the base station discontinuous reception. Specifically, the terminal 20 identifies the status of the base station discontinuous reception via RRC, MAC-CE, or DCI. In a case of DCI, the terminal 20 expects that the terminal 20 is to receive DCI indicating the status of the base station discontinuous reception from the base station 10. It is to be noted that the details of an indication via DCI will be described in Embodiment 3.

In a case where the base station discontinuous reception is activated, the terminal 20 may transmit an uplink channel when drx-onDurationTimer, drx-InactivityTimer, or drx-RetransmissionTimerUL is running.

### <Option 2>

The terminal 20 may ignore the base station discontinuous reception. Specifically, the terminal 20 performs an uplink transmission as scheduled or configured by the base station 10 regardless of the status of the base station discontinuous reception.

It is to be noted that, in a case where the base station discontinuous reception is activated, the base station 10 may perform scheduling or configuration by taking into account the base station discontinuous reception, or may perform scheduling or configuration without taking into account the base station discontinuous reception. In a case where the scheduling or configuration is performed by taking into account the base station discontinuous reception, the function of the base station discontinuous reception is realized even when the terminal 20 ignores the base station discontinuous reception. Conversely, in a case where the scheduling or configuration is performed without taking into account the base station discontinuous reception, there will be a waste of power consumption by the terminal 20 due to the transmission of unnecessary signals if the terminal 20 ignores the base station discontinuous reception.

On the other hand, in a case where the base station discontinuous reception is deactivated, the base station 10 may receive an uplink channel transmitted from the terminal 20 regardless of the parameters of the base station discontinuous reception. That is, the base station 10 may keep the receiver unit ON and may continue reception of an uplink channel from the terminal 20.

In a case where the base station discontinuous reception is deactivated, the terminal 20 may perform an operation of one of the following options.

### <Option 1>

The terminal 20 may perform an operation by assuming the base station discontinuous reception. Specifically, the terminal 20 identifies the status of the base station discontinuous reception via RRC, MAC-CE, or DCI. In a case of DCI, the terminal 20 expects that the terminal 20 is to receive DCI indicating the status of the base station discontinuous reception from the base station 10. It is to be noted that the details of an indication via DCI will be described in Embodiment 3.

In a case where the base station discontinuous reception is deactivated, the terminal 20 performs an uplink transmission as scheduled or configured by the base station 10 regardless of the status of the base station discontinuous reception.

### <Option 2>

The terminal 20 may ignore the base station discontinuous reception. Specifically, the terminal 20 performs an uplink transmission as scheduled or configured by the base station 10 regardless of the status of the base station discontinuous reception.

In addition, the base station 10 may receive terminal assistance information in order to determine the values of the above-described parameters that define the wake-up/sleep durations.

The terminal assistance information may be a terminal traffic period. The base station 10 may receive terminal assistance information in an upper layer. The base station 10 determines the values of the parameters by taking into account the terminal assistance information reported by the terminal 20.

The terminal 20 may transmit the terminal assistance information such as a terminal traffic period to the base station 10.

According to an embodiment of the present invention, the discontinuous reception by the base station 10 can be performed.

### (Embodiment 2)

In this embodiment, an example of a method of triggering the base station discontinuous reception will be described.

Activation/deactivation of the base station discontinuous reception may be performed according to one of the following options.

### <Option 1>

The base station 10 may perform activation/deactivation of the base station discontinuous reception when an RRC parameter indicating activation/deactivation of the base station discontinuous reception is configured by the terminal 20 or another network node (for example, the core network, another base station, or the like).

### <Option 2>

The base station 10 may perform activation/deactivation of the base station discontinuous reception when a MAC-CE command indicating activation/deactivation of the base station discontinuous reception is received from the terminal 20 or another network node (for example, the core network, another base station, or the like).

### <Option 3>

When the base station 10 receives UCI included in PUCCH or PUSCH from the terminal 20, the base station 10 may perform activation/deactivation of the base station discontinuous reception based on the indication of activation/deactivation of the base station discontinuous reception included in UCI.

The UCI including an indication of activation/deactivation of the base station discontinuous reception may be a UCI of a newly defined UCI type that is different from the conventional type. In addition, the UCI may be of a UCI type that is the same as the conventional type such as HARQ-ACK, CSI, SR, or the like.

The terminal 20 may activate/deactivate the base station discontinuous reception by transmitting PUCCH or PUSCH for performing an indication of base station discontinuous reception (that is, activation/deactivation) to the base station 10.

The terminal 20 may receive DCI indicating the status of the base station discontinuous reception from the base station 10 in order to identify whether or not the indication via UCI is successfully decoded by the base station 10 and whether or not the base station 10 and the terminal 20 have the same understanding about the status of the base station discontinuous reception. It is to be noted that the details of the DCI will be described in Embodiment 3.

### <Option 4>

The base station 10 may activate/deactivate the base station discontinuous reception when a certain condition is satisfied. For example, the base station 10 may activate the base station discontinuous reception in a case where the base station 10 does not receive an uplink channel from the terminal 20 for a certain period. The certain period may be certain symbols, slots, subframes, milliseconds, seconds, or the like.

The terminal 20 may receive DCI indicating the status of the base station discontinuous reception from the base station 10 in order to share the same understanding about the status of the base station discontinuous reception between the base station 10 and the terminal 20. It is to be noted that the details of the DCI will be described in Embodiment 3.

### <Option 5>

The base station 10 may activate/deactivate the base station discontinuous reception according to a combination of the above-described options.

In addition, as a procedure of activating/deactivating the base station discontinuous reception, the base station 10 may perform an operation described in one of the following options.

### <Option 1>

The base station 10 may immediately activate/deactivate the base station discontinuous reception when one of the above-described options for triggering the activation/deactivation of the base station discontinuous reception is performed.

### <Option 2>

The base station 10 may receive an indication of a timing of activation/deactivation of the base station discontinuous reception in a form of a predetermined time interval from the indication reception or in a form of a specified time. The unit of the time interval or the specified time may be a symbol, a slot, a subframe, a millisecond, a second, or the like. In other words, the base station 10 may activate/deactivate the base station discontinuous reception when one of the above-described options for triggering the activation/deactivation of the base station discontinuous reception is performed.

### <Option 3>

The base station 10 may activate/deactivate the base station discontinuous reception based on a newly introduced timer. The activation timer and the deactivation timer may be the same or different. The unit of the timer may be a symbol, a slot, a subframe, a millisecond, a second, or the like. The base station 10, the terminal 20, or another network node may configure the timer via RRC, or may specify the timer via MAC-CE or UCI/DCI.

In other words, the timers are performed when one of the above-described options for triggering the activation/deactivation of the base station discontinuous reception is performed. The base station 10 may activate/deactivate the base station discontinuous reception when the timers expire.

Advantages of the timers will be described. Even when activation of the base station discontinuous reception is indicated, there may be an actual uplink transmission by the terminal 20 after a predetermined delay from the indication due to the processing of the terminal 20. In the above-described case, the base station discontinuous reception can be activated after a predetermined period by introducing the timers, and thus, the power consumption of the base station 10 can be reduced.

In addition, even when deactivation of the base station discontinuous reception is indicated, there may be continued actual uplink transmissions by the terminal 20 during a certain period from the indication due to the processing of the terminal 20. In the above-described case, the base station discontinuous reception can be deactivated after a predetermined period by introducing the timers, and thus, the performance of the terminal 20 can be improved.

According to an embodiment of the present invention, triggering of the base station discontinuous reception can be implemented and an operation of activation/deactivation in a triggered case can be implemented.

### (Embodiment 3)

In this embodiment, an example of receiving, by the terminal, an indication related to the base station discontinuous reception via DCI will be described.

In a case where the terminal 20 recognizes the status of the base station discontinuous reception and the terminal 20 and the base station 10 have a shared understanding, a mechanism of indicating the status of the base station discontinuous reception from the base station 10 to the terminal 20 is required to be provided. An indication via DCI is a promising indication in terms of a timely indication.

It is to be noted that, with respect to the advantageous point of having the shared understanding, the terminal 20 can stop uplink transmissions in a case where the base station discontinuous reception is activated, and thus, the power consumption of the terminal 20 can be saved.

A new RNTI may be introduced in order to indicate the status of the base station discontinuous reception. The new RNTI may be referred to as gNB CDRX-RNTI (GC-RNTI), for example.

In addition, regarding the introduction of a DCI field, one of the following options may be adopted.

### <Option 1>

A new DCI field for indicating the status of the base station discontinuous reception may be introduced. The bit size of the DCI field to be introduced may be one bit, and "1" may indicate the activated state and "0" may indicate the deactivated state. It is to be noted that the indications of "1" and "0" may be reversed.

### <Option 2>

A new DCI field is not required to be introduced. In other words, the existing field may indicate the status of the base station discontinuous reception. For example, the terminal 20 may determine that the status of the base station discontinuous reception is activated in a case where the corresponding DCI format is scrambled by a new RNTI such as GC-RNTI and the HPN and RV fields are configured to be all "0"s.

In addition, for example, the terminal 20 may determine that the status of the base station discontinuous reception is deactivated in a case where the corresponding DCI format is scrambled by a new RNTI such as GC-RNTI, the HPN and RV fields are configured to be all "0"s, and the MCS field is configured to be all "1"s.

In addition, the corresponding DCI format may be one of the following options.

### <Option 1>

May be a DCI specific to the terminal 20.

### <Option 1-1>

The base station 10 may indicate the status of the base station discontinuous reception by using a new DCI format that is different from the conventional DCI format.

### <Option 1-2>

The base station 10 may indicate the status of the base station discontinuous reception by using the conventional DCI format 0_1, 0_2, 1_1, 1_2, or other DCI formats.

### <Option 2>

May be a DCI that is common to a group of terminals 20.

### <Option 2-1>

The base station 10 may indicate the status of the base station discontinuous reception by using a new DCI format that is different from the conventional DCI format. The above-described new DCI field may be introduced by the new DCI format together with other new DCI fields for the energy saving technology of the base station 10. The base station 10 may scramble the new DCI format with the above-described new RNTI (GC-RNTI, or the like).

### <Option 2-2>

The base station 10 may indicate the status of the base station discontinuous reception by using the conventional DCI format 2_6 or another group-common DCI format.

In a case where the DCI format 2_6 is assumed to be used, the conventional DCI field of the DCI format may be reinterpreted in order to indicate the status of the base station discontinuous reception. For example, "Wake-up indication" may be used for the reinterpretation. The activated state may be indicated by "1", and the deactivated state may be indicated by "0". The above-described indications of "1" and "0" may be replaced with each other.

For the sake of differentiation, the base station 10 may scramble the DCI format 2_6 with the above-described new RNTI (GC-RNTI, or the like) instead of with the PS-RNTI.

According to an embodiment of the present invention, the terminal 20 recognizes the status of the base station discontinuous reception and the terminal 20 and the base station 10 can share the same understanding.

### (Embodiment 4)

In this embodiment, an example of mutually reporting the capability information of the base station or the terminal related to the base station discontinuous reception will be described.

The following capability information may be introduced.

The base station capability information indicating the capability of the base station 10 may be introduced. In other words, the base station 10 transmits the base station capability information to the terminal 20 or another network node. The terminal 20 or another network node that has received the base station capability information may assume the capability of the base station 10 based on the received base station capability information.

The base station capability information may include information indicating whether or not the base station discontinuous reception is supported. In addition, the base station capability information indicating whether or not the DCI indication indicating the status of the base station discontinuous reception is supported may be introduced.

In addition, the following terminal capability information may be introduced. For example, the terminal capability information indicating whether or not the base station discontinuous reception is supported may be introduced. In addition, the terminal capability information indicating whether or not the identification of the status of the base station discontinuous reception is supported may be introduced.

In a case where the terminal 20 has the terminal capability of supporting the identification of the status of the base station discontinuous reception, the terminal 20 may identify whether the base station discontinuous reception function is activated or deactivated. For example, the terminal 20 may perform an operation of an option 1 described in an embodiment 1 of the present invention. In addition, in a case where the terminal 20 does not have the terminal capability of supporting the identification of the status of the base station discontinuous reception, the terminal 20 may perform an operation of an option 2 described in an embodiment 1 of the present invention.

In addition, the terminal capability information indicating whether or not the DCI indication indicating the status of the base station discontinuous reception is supported may be introduced. In addition, the terminal capability information indicating whether or not a new terminal-specific/group-common DCI format is supported may be introduced.

The depending relationship between the base station capability information and the terminal capability information may be one of the following.

### <Option 1>

Each of the base station capability information and the terminal capability information that indicate that the base station discontinuous reception is supported may be required to be reported in order to apply the base station discontinuous reception.

### <Option 2>

Only one of the base station capability information and the terminal capability information that indicate that the base station discontinuous reception is supported may be required to be reported in order to apply the base station discontinuous reception.

According to an embodiment of the present invention, the capability information of the base station or the terminal related to the base station discontinuous reception can be mutually reported.

The terminal capability described in each of the above-described embodiments may be limited to a case in which the terminal 20 is a reduced capability terminal, or may be also applied to a case in which the terminal 20 is not a reduced capability terminal.

### (Embodiment overview 2)

In addition, in order to reduce energy consumption by the base station 10, the cell DTX/DRX is being discussed. For example, alignment between the cell DTX/DRX and the UE-DRX in the RRC connected mode, information exchange between nodes related to the cell DTX/DRX, and the like are being discussed.

The mechanism of activating or deactivating the transmitting unit and the receiving unit of the base station 10 is important in terms of reducing the power consumption at the base station 10. In order to reduce energy consumption by the base station 10, adaptation of the DL transmission and the UL reception is being discussed.

The cell DTX/DRX is useful in terms of achieving the adaptation of the DL transmission and the UL reception. However, the detailed operations of the cell DTX/DRX have been unclear. Accordingly, embodiments from Embodiment 5 to Embodiment 8 will be described as specific embodiments related to the cell DTX/DRX.

### (Embodiment 5)

In Embodiment 5, the definition of the cell DTX/DRX will be described. The cell DRX may be defined as described in the above-described Embodiment 1 to the above-described Embodiment 4. Whether or not to perform the cell DRX may be determined by a higher layer parameter. In addition, the periodicity, the start slot, the offset, and the duration may be configured. In addition, whether or not the cell DRX can be applied may be determined by a semi-static, dynamic, or flexible network state.

The cell DTX may be defined as described below. Whether or not to perform the cell DTX may be determined by a higher layer parameter. In addition, the periodicity, the start slot, the offset, and the duration may be configured. In addition, whether or not the cell DTX can be applied may be determined by a semi-static, dynamic, or flexible network state.

### <Option 1>

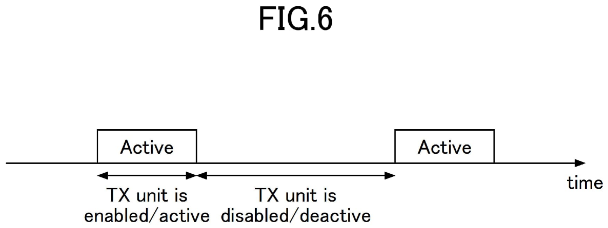

Fig. 6 is a drawing for describing the discontinuous transmission of a base station related to Embodiment 5 of the present invention. As illustrated in Fig. 6, a duration in which the base station 10 activates or deactivates the transmitter unit of the base station 10 itself may be introduced as a cell DTX.

There may be a transmitting unit and/or parameters on a per-port basis, a per-panel basis, a per-beam basis, a per-carrier basis, or a per-cell basis. The cell DTX may be defined by a part of or all of the parameters described in the following 1) to 6). The unit of the parameters may be, for example, a symbol, a slot, a subframe, a millisecond, a second, or a different unit. The units may be the same or different between the parameters.
1) dtx-onDurationTimer: A duration from the start of the DTX cycle.
2) dtx-SlotOffset: A delay period before starting the dtx-onDurationTimer.
3) dtx-InactivityTimer: A period that starts after the DL transmission occasion (an occasion in which the base station 10 performs a DL transmission and the terminal 20 receives the DL transmission).
4) dtx-LongCycleStartOffset: The long DTX cycle (that is, dtx-LongCycle) and dtx-StartOffset that defines when the long DTX cycle and short DTX cycle start.
5) dtx-ShortCycle: The short DTX cycle. Can be an optional parameter.
6) dtx-ShortCycleTimer: A duration of a short DTX cycle by the base station 10. The short DTX starts when there is an occurrence of a DL reception during the long DTX. Can be an optional parameter.

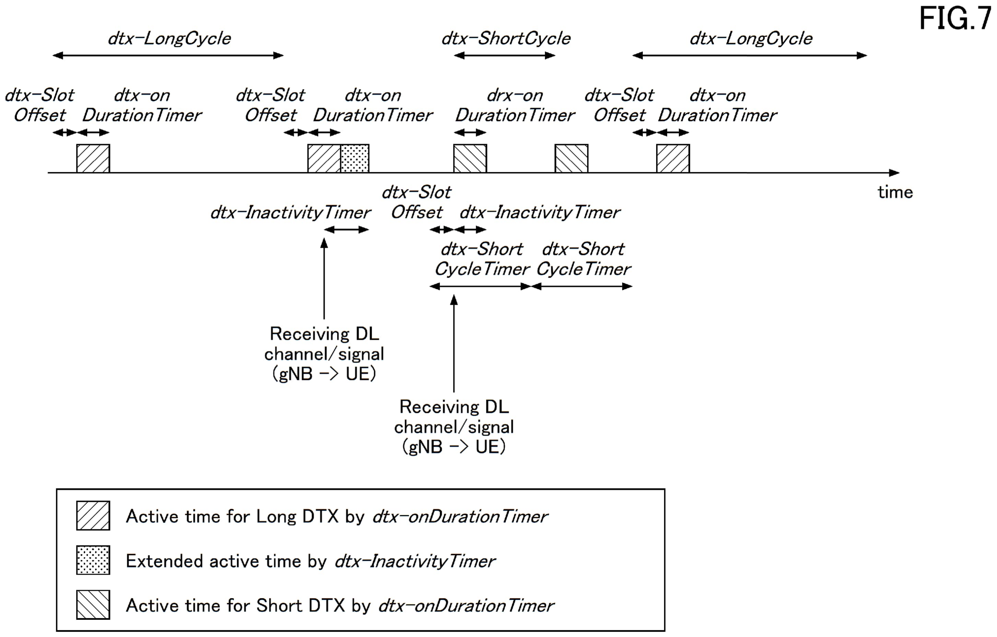

Fig. 7 is a drawing for describing each parameter related to Embodiment 5 of the present invention. As illustrated in Fig. 7, there is an active period as long as dtx-onDurationTimer after dtx-SlotOffset from the start of dtx-LongCycle. In a case where there is an occurrence of a DL reception during the drx-LonCycle, the active period ends after dtx-InactivityTimer from a time point of an occurrence of the DL reception and the dtx-ShortCycle starts. In a case where there is an occurrence of a DL reception during the dtx-ShortCycleTimer, the dtx-ShortCycle continues. In a case where there is no occurrence of a DL reception during the dtx-ShortCycleTimer, the dtx-LongCycle starts.

In a case where the cell DTX is activated, the base station 10 may transmit a DL channel or a DL signal when dtx-onDurationTimer or dtx-InactivityTimer is running. With respect to an operation of the terminal 20, in a case where the cell DTX is activated, the terminal 20 may receive a DL channel or a DL signal when dtx-onDurationTimer or dtx-InactivityTimer is running. The terminal 20 may expect to receive a DL channel or a DL signal when dtx-onDurationTimer or dtx-InactivityTimer is not running.

In a case where the cell DTX is deactivated, the terminal 20 may expect to receive a DL channel or a DL signal as indicated or configured by the base station 10.

The DL channel or DL signal may be one of PDCCH, PDSCH, SPS (Semi Persistent Scheduling) - PDSCH, CSI-RS (Channel State Information - Reference Signal), PT-RS (Phase Tracking - Reference Signal), and DM-RS (Demodulation - Reference Signal).

The UL channel or the UL signal may be any one of PRACH, PUCCH, PUSCH, CG-PUSCH, SRS, PT-RS, or DM-RS.

### (Embodiment 6)

In Embodiment 6, the configuration of the cell DTX/DRX will be described.

### <Option 1>

The joint configuration may be performed. The cell DTX and the cell DRX may be configured together by a common parameter. In a case where the common parameter (for example, CellDTXDRX-Config) is configured, the cell DTX and the cell DRX may be activated. The terminal 20 may perform an operation of Embodiment 5 as appropriate.

The common parameter may include one of or both of the information elements described in the following 1) and 2).
1) A parameter common to DTX and DRX. Some parameters may be common to DTX and DRX. For example, a parameter indicating the on-duration timer may be common to DTX and DRX. For example, a parameter indicating the cycle may be common to DTX and DRX.
2) Parameters separated between DTX and DRX. Some parameters may be configured individually for DTX and DRX. For example, parameters indicating the slot offset may be configured individually for DTX and DRX.

According to the Option 1, the RRC signaling overhead can be reduced.

### <Option 2>

Separate configurations may be performed. The cell DTX and the cell DRX may be individually configured by separate parameters. In a case where a parameter for DTX (for example, CellDTX-Config) is configured, the cell DTX may be activated. In a case where a parameter for DRX (for example, CellDRX-Config) is configured, the cell DRX may be activated. The parameter for DTX may include parameters described in Embodiment 5. The parameter for DRX may include parameters described in Embodiment 1.

According to the Option 2, the configuration flexibility is improved when activating one of the cell DTX or the cell DRX.

### (Embodiment 7)

In Embodiment 7, activating or deactivating of the cell DTX/DRX will be described. In a case where the cell DTX and the cell DRX are configured together (Option 1 of Embodiment 6), the cell DTX and the cell DRX may be activated or deactivated as described below.

### <Option 1>

The cell DTX and the cell DRX may be activated or deactivated by RRC signaling. The cell DTX and the cell DRX may be activated or deactivated in a case where an RRC parameter is configured. For example, the RRC parameter may be a common parameter in Embodiment 6 (for example, CellDTXDRX-Config).

### <Option 2>

The cell DTX and the cell DRX may be activated or deactivated by MAC-CE. The cell DTX and the cell DRX may be activated or deactivated in a case where MAC-CE is received by the terminal 20.

### <Option 3>

The cell DTX and the cell DRX may be activated or deactivated by DCI. The terminal 20 may be dynamically indicated by DCI that the cell DTX and the cell DRX are activated or deactivated. The indication by DCI may be performed as described in the following 1) to 4).
1) The DCI format may be a UE-specific DCI format or may be a group-common DCI format.
2) The DCI format may be a conventional format (for example, DCI format 1_1, 1_2, 2_0) or may be newly defined (for example, 1_x, 2_x).
3) The RNTI may be a conventional RNTI (for example, C-RNTI, SFI-RNTI) or a new RNTI may be defined.
4) The DCI field may be a set of a conventional field and/or a new field. For example, in a case of a set of conventional fields, some of the fields may be used for activating or deactivating of the cell DTX and cell DRX as described in the following Alt. 1) and Alt. 2).

Alt. 1) The terminal 20 may dynamically activate the cell DTX and the cell DRX in a case where the scrambling is performed by using the conventional RNTI such as CS-RNTI, HPN is configured to be all "0", RV is configured to be all "00", and TDRA is configured to be all "1". In addition, for example, the terminal 20 may dynamically deactivate the cell DTX and the cell DRX in a case where HPN is configured to be all "0", RV is configured to be all "00", MCS is configured to be all "1", FDRA is configured to be all "1", and TDRA is configured to be all "1".

Alt. 2) The terminal 20 may dynamically activate the cell DTX and the cell DRX in a case where the scrambling is performed by using a new RNTI, HPN is configured to be all "0", and RV is configured to be all "00", for example. In addition, the terminal 20 may dynamically deactivate the cell DTX and the cell DRX in a case where HPN is configured to be all "0", RV is configured to be all "00", MCS is configured to be all "1", and FDRA is configured to be all "1", for example.

For example, in a case of a new DCI field, the cell DTX and the cell DRX may be activated or deactivated by the new DCI field. The new DCI field may be referred to as "cell DTX DRX identifier". For example, the terminal 20 may dynamically activate the cell DTX and the cell DRX in a case where the cell DTX DRX identifier is configured to be "1". In addition, for example, the terminal 20 may dynamically deactivate the cell DTX and the cell DRX in a case where the cell DTX DRX identifier is configured to be "0". It is to be noted that the DCI including the new DCI field may be scrambled by using a conventional RNTI or a new RNTI.

In addition, in a case where the cell DTX and the cell DRX are configured separately (Option 2 of Embodiment 6), the cell DTX and the cell DRX may be activated or deactivated as described below.

### <Option 1>

The cell DTX and the cell DRX may be activated or deactivated by RRC signaling. The cell DTX and the cell DRX may be activated or deactivated in a case where an RRC parameter is configured. For example, the RRC parameter may be separate parameters in Embodiment 6 (for example, CellDTX-Config, CellDRX-Config).

### <Option 2>

The cell DTX or the cell DRX may be activated or deactivated by MAC-CE. The cell DTX or the cell DRX may be activated or deactivated in a case where MAC-CE is received by the terminal 20.

### <Option 3>

The terminal 20 may be dynamically indicated by DCI that the cell DTX or the cell DRX is activated or deactivated. The indication by DCI may be performed as described in the following 1) to 4).
1) The DCI format may be a UE-specific DCI format or may be a group-common DCI format.
2) The DCI format may be a conventional format (for example, DCI format 1_1, 1_2, 2_0) or may be newly defined (for example, 1_x, 2_x).
3) The RNTI may be a conventional RNTI (for example, C-RNTI, SFI-RNTI) or a new RNTI may be defined.
4) The DCI field may be a set of a conventional field and/or a new field. For example, each of a set of different DCI fields may be used for activating or deactivating the cell DTX or the cell DRX in a manner in which one of the cell DTX and the cell DRX is indicated by the set of different DCI fields. For example, in a case of a set of conventional fields, some of the fields may be used for activating or deactivating of the cell DTX and cell DRX as described in the following Alt. 1) and Alt. 2).

Alt. 1) The terminal 20 may dynamically activate the cell DTX in a case where the scrambling is performed by using the conventional RNTI such as CS-RNTI, HPN is configured to be all "0", RV is configured to be all "00", and PRI is configured to be all "1", for example. In addition, for example, the terminal 20 may dynamically deactivate the cell DTX in a case where HPN is configured to be all "0", RV is configured to be all "00", MCS is configured to be all "1", FDRA is configured to be all "1", and PRI is configured to be all "1". In addition, for example, the terminal 20 may dynamically activate the cell DRX in a case where HPN is configured to be all "0", RV is configured to be all "00", and TDRA is configured to be all "1". In addition, for example, the terminal 20 may dynamically disable the cell DRX in a case where HPN is configured to be all "0", RV is configured to be all "00", MCS is configured to be all "1", FDRA is configured to be all "1", and TDRA is configured to be all "1".

It is to be noted that the PRI field and the TDRA field may be additionally used for indicating which of the CG-PUSCH/SPS-PDSCH or which of the cell DTX/cell DRX is a target of the activating or deactivating DCI.

It is to be noted that a field (for example, TDRA) that is the same as the fields used as described above, such as PRI and TDRA, may be used for indicating which of the CG-PUSCH/SPS-PDSCH or the cell DTX/cell DRX is the target. In a case where different DCI formats are used, the DCI formats may be used for indicating that the target is the cell DTX or for indicating that the target is the cell DRX. For example, DCI format 0_0 may be used for activating or deactivating the cell DRX and DCI format 1_0 may be used for activating or deactivating the cell DTX.

Alt. 2) When the scrambling is performed by using a new RNTI, the terminal 20 may dynamically activate the cell DTX in a case where HPN is configured to be all "0", RV is configured to be all "00", and PRI is configured to be all "1", for example. For example, the terminal 20 may dynamically deactivate the cell DTX in a case where HPN is configured to be all "0", RV is configured to be all "00", MCS is configured to be all "1", FDRA is configured to be all "1", and PRI is configured to be all "1". For example, the terminal 20 may dynamically activate the cell DRX in a case where HPN is configured to be all "0", and RV is configured to be all "00". For example, the terminal 20 may dynamically deactivate the cell DRX in a case where HPN is configured to be all "0", RV is configured to be all "00", MCS is configured to be all "1", and FDRA is configured to be all "1".

It is to be noted that although PRI, for example, is used as described above, an additional field is not required to be used for indicating which of the cell DTX or the cell DRX is the target. In a case where different DCI formats are used, the DCI formats may be used for indicating that the target is the cell DTX or for indicating that the target is the cell DRX. For example, DCI format 0_0 may be used for activating or deactivating the cell DRX and DCI format 1_0 may be used for activating or deactivating the cell DTX.

For example, in a case of a new DCI field, the cell DTX and the cell DRX may be activated or deactivated by the new DCI field. The new DCI field may be referred to as "cell DTX identifier" or "cell DRX identifier".

When the cell DTX and the cell DRX are separately indicated by separate fields, the terminal 20 may dynamically activate the cell DTX in a case where the cell DTX identifier is configured to be "1", for example. In addition, for example, the terminal 20 may dynamically deactivate the cell DTX in a case where the cell DTX identifier is configured to be "0". For example, the terminal 20 may dynamically activate the cell DRX in a case where the cell DRX identifier is configured to be "1". In addition, for example, the terminal 20 may dynamically disable the cell DRX in a case where the cell DRX identifier is configured to be "0".

In addition, the new DCI field may be referred to as "cell DTX DRX identifier". When the cell DTX and the cell DRX are indicated together by a common field, for example, the terminal 20 may dynamically activate the cell DTX or may dynamically deactivate the cell DRX in a case where the cell DTX DRX identifier is configured to be "01". For example, the terminal 20 may dynamically activate the cell DRX or may dynamically deactivate the cell DTX in a case where the cell DTX DRX identifier is configured to be "10". For example, the terminal 20 may dynamically activate the cell DTX and the cell DRX in a case where the cell DTX DRX identifier is configured to be "11". For example, the terminal 20 may dynamically activate the cell DTX and the cell DRX in a case where the cell DTX DRX identifier is configured to be "00". The above-described mapping of bits of the cell DTX and the cell DRX may be reversed.

It is to be noted that the DCI including the new DCI field may be scrambled by using a conventional RNTI or a new RNTI.

The timing of applying the above-described activating or deactivating of the cell DTX or the cell DRX indicated by MAC-CE or DCI may be a timing as described in the following 1) or 2).
1) The terminal 20 may immediately perform activating or deactivating. When the activating or deactivating of the cell DTX or the cell DRX is indicated by MAC-CE or DCI, the cell DTX or the cell DRX may be activated or deactivated immediately.
2) The terminal 20 may perform activating or deactivating at the indicated timing. The timing of performing activating or deactivating of the cell DTX or the cell DRX may be indicated as an interval from the activating or deactivating indication or as a certain time point, via RRC signaling, MAC-CE, or DCI. The time unit may be a symbol, a slot, a subframe, a millisecond, a second, or the like. When activating or deactivating of the cell DTX or the cell DRX is indicated via MAC-CE or DCI, the cell DTX or the cell DRX may be activated or deactivated at the time point that is indicated in advance.

### (Embodiment 8)

In Embodiment 8, the related operation between the cell DTX/DRX and the UE DRX will be described. In a case where the time positions are not aligned between the cell DTX and the UE DRX, there may be a possibility that the terminal 20 wakes up to receive a DL channel or a DL signal when DL transmissions are not performed because of the cell DTX.

Accordingly, operations may be performed as described in the following options from Option 1 to Option 5.

### <Option 1>

In a case where the UE DRX (for example, DRX-Config) is configured, the terminal 20 is not required to expect that the cell DTX is configured.

### <Option 2>

In a case where the cell DTX is configured, the terminal 20 is not required to expect that the UE DRX (for example, DRX-Config) is to be configured. It is to be noted that the parameter(s) of the cell DTX may be the parameter(s) described in Embodiment 6.

### <Option 3>

In a case where the UE DRX (for example, DRX-Config) is configured, the terminal 20 is not required to expect that the cell DTX whose time position is not aligned with the UE DRX is to be configured. In a case where the time position of the cell DTX is aligned with the time position of the UE DRX, the cell DTX and the UE DRX may be jointly configured.

### <Option 4>

In a case where the cell DTX is configured, the terminal 20 is not required to expect that the UE DRX (for example, DRX-Config) whose time position is not aligned with the time position of the cell DTX is to be configured. In a case where the time position of the cell DTX is aligned with the time position of the UE DRX, the cell DTX and the UE DRX may be jointly configured.

### <Option 5>

The cell DTX and the UE DRX may be configured for the terminal 20 regardless of whether or not the time position of the cell DTX is aligned with the time position of the UE DRX. In addition, in a case where the cell DTX is configured in addition to the UE DRX, the parameter(s) of the cell DTX may be prioritized. The terminal 20 may ignore the parameter(s) of the UE DRX. The terminal 20 may perform an operation as described in Embodiment 5. In addition, in a case where the cell DTX is configured in addition to the UE DRX, the both parameters may be applied. The terminal 20 may wake up during the active period of the cell DTX and the active period of the cell DRX.

The above-described "time positions are aligned between the cell DTX and the UE DRX" may be defined as the following Option 1 or Option 2 described below.

### <Option 1>

The time position of the cell DTX is defined to be aligned with the time position of the UE DRX in a case where the long cycle of the cell DTX is the same as the long cycle of the UE DRX.

### <Option 1-1>

Furthermore, in a case where the long cycle of the cell DTX is the same as the long cycle of the UE DRX, the time position of the cell DTX may be defined to be aligned with the time position of the UE DRX regardless of the active periods within the long cycle. In other words, the time positions may be defined to be aligned with each other in a case where the long cycle of the cell DTX (for example, dtx-LongCycle) is the same as the long cycle of the UE DRX (for example, drx-LongCycle).

### <Option 1-2>

In a case where the long cycle of the cell DTX is the same as the long cycle of the UE DRX, the time position of the cell DTX may be defined to be aligned with the time position of the UE DRX depending on the active periods within the long cycle. The time positions may be defined to be aligned between the cell DTX and the UE DRX in a case where the on-duration timers and the slot offsets (for example, dtx-LongCycle, drx-LongCycle, dtx-onDurationTimer, drx-onDurationTimer, dtx-SlotOffset, drx-SlotOffset) are the same between the cell DTX and the UE DRX. In addition, other parameters (for example, dtx-InactivityTimer, drx-InactivityTimer, etc.,) may be additionally taken into account in order to determine whether the definition is satisfied.

### <Option 2>

The time position of the cell DTX may be defined to be aligned with the time position of the UE DRX in a case where, in addition to the long cycles, the short cycles are the same between the cell DTX and the UE DRX. Option 2 may be applied to a case where the condition of Option 1-1 or Option 1-2 is satisfied.

### <Option 2-1>

Furthermore, in a case where the short cycle of the cell DTX is the same as the short cycle of the UE DRX, the time position of the cell DTX may be defined to be aligned with the time position of the UE DRX regardless of the active periods within the short cycle. In other words, the time positions may be defined to be aligned in a case where the short cycle of the cell DTX (for example, dtx-ShortCycle) is the same as the short cycle of the UE DRX (for example, drx-ShortCycle).

### <Option 2-2>

In a case where the short cycle of the cell DTX is the same as the short cycle of the UE DRX, the time position of the cell DTX may be defined to be aligned with the time position of the UE DRX depending on the active periods within the short cycle. The time position of the cell DTX may be defined to be aligned with the time position of the UE DRX in a case where the short cycle timers and the short cycles (for example, dtx-ShortCycleTimer, drx-ShortCycleTimer, dtx-ShortCycle, drx-ShortCycle) are the same between the cell DTX and the UE DRX.

### (Embodiment overview 3)

### (Embodiment 9)

The DCI (Downlink Control Information) format for group common L1 signaling using PDCCH for indicating cell DTX/DRX activation/deactivation may be DCI format 2_6, or may be a new DCI format 2_X. The activation/deactivation may be a dynamic activation/deactivation.

For example, the field of DCI format 2_X may consist of, for example, a block number 1, a block number 2, ..., a block number N. Each block may include a configuration of DTX activation/deactivation and a configuration of DRX activation/deactivation.

For example, with respect to the DCI format 2_X, the DCI size is not required to be increased and the number of blind decodings is not required to be increased.

### <DCI field of Proposal 1>

For example, in a case where the DCI format for group common L1 signaling using PDCCH for indicating cell DTX/DRX activation/deactivation includes a new DCI field, the cell DTX or cell DRX may be activated or deactivated by the new DCI field. The new DCI field may be referred to as "cell DTX identifier" or "cell DRX identifier".

When the cell DTX and the cell DRX are separately indicated by separate fields, the terminal 20 may dynamically activate the cell DTX in a case where the cell DTX identifier is configured to be "1", for example. In addition, for example, the terminal 20 may dynamically deactivate the cell DTX in a case where the cell DTX identifier is configured to be "0". For example, the terminal 20 may dynamically activate the cell DRX in a case where the cell DRX identifier is configured to be "1". In addition, for example, the terminal 20 may dynamically disable the cell DRX in a case where the cell DRX identifier is configured to be "0".

In addition, the new DCI field may be referred to as "cell DTX DRX identifier". When the cell DTX and the cell DRX are indicated together by a common field, for example, the terminal 20 may dynamically activate the cell DTX or may dynamically deactivate the cell DRX in a case where the cell DTX DRX identifier is configured to be "01". For example, the terminal 20 may dynamically activate the cell DRX or may dynamically deactivate cell DTX in a case where the cell DTX DRX identifier is configured to be "10". For example, the terminal 20 may dynamically activate the cell DTX and the cell DRX in a case where the cell DTX DRX identifier is configured to be "11". For example, the terminal 20 may dynamically activate the cell DTX and the cell DRX in a case where the cell DTX DRX identifier is configured to be "00". The above-described mapping of bits of the cell DTX and the cell DRX may be reversed.

It is to be noted that the DCI including the new DCI field may be scrambled by using a conventional RNTI or a new RNTI. Hereinafter, the above-described DCI field is referred to as "DCI field of Proposal 1".

Here, with respect to the dynamic activation/deactivation of cell DTX/DRX, the detail of the DCI field, mapping between UE and each block, or the like is required to be determined. In addition, whether or not the UE supports dynamic activation/deactivation of cell DTX/DRX for a number of cells, the number being different from the number of cells supported by the UE, needs to be determined, and how to support the different number of cells needs to be determined.

In addition, with respect to the dynamic activation/deactivation of cell DTX/DRX for a plurality of cells by using the L1 signaling, the DCI format contentsand the DCI format fields need to be determined.

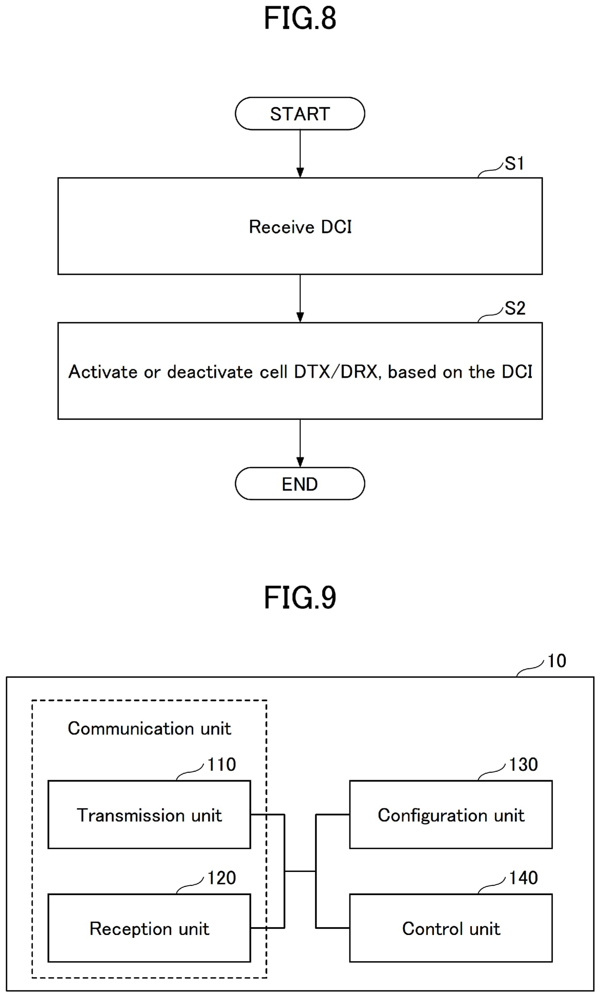

Fig. 8 is a flowchart for describing an example of the cell DTX/DRX related to Embodiment 9 of the present invention. In step S1, the terminal 20 receives DCI. In subsequent step S2, the terminal 20 activates/deactivates cell DTX/DRX based on the DCI.

The information consisting of a block number 1, a block number 2, ..., a block number N may be transmitted by using the DCI format for indicating activation/deactivation of cell DTX/DRX.

Each block may be associated with a UE. Each block may include one or more of the above-described DCI fields of Proposal 1 or one or more of DCI fields of Proposal 2 described below. It is to be noted that other fields may be included in the DCI format.

In a case where the cell DTX and the cell DRX are indicated by separate DCI fields, presence or absence of the DCI field for cell DTX and the field for cell DRX may be configured by a higher layer parameter.

For example, in a case where a higher layer parameter, celDTX, is true, the field for activating/deactivating cell DTX may be present in the block of the DCI. In a case where the higher layer parameter, celDTX, is not true, the field for activating/deactivating cell DTX is not required to be present in the block of the DCI.

For example, in a case where a higher layer parameter, celDRX, is true, the field for activating/deactivating cell DRX may be present in the block of the DCI. In a case where the higher layer parameter, celDRX, is not true, the field for activating/deactivating cell DRX is not required to be present in the block of the DCI.

The starting position of the block may be determined by a parameter provided by the higher layer. In a case where the DCI size is X bits, the starting position of each block may be configured by an indication by using a bitmap. For example, in a case where the DCI size is 140 bits and each block is two bits, the starting position of the block number 1 may be 0, the starting position of the block number 2 may be 2, the starting position of the block number 3 may be 4, ..., and the starting position of the block number N (=70) may be 138. The DCI size X may be configured by a higher layer parameter. In a case where DCI format 2_6 is configured, the DCI size X may be the same as DCI format 2_6.

### <DCI field of Proposal 2>

A case will be described in which cell DTX/DRX is configured for a plurality of cells. The new DCI field described below is referred to as "DCI field of Proposal 2".

### <Option 1>

In a case where the cell DTXs and/or DRXs for a plurality of cells are activated or deactivated together, the following operation may be performed.

### <Option 1-1>

In a case where the cell DTX and the cell DRX are separately indicated by using separate fields, the cell DTX or the cell DRX may be activated or deactivated by using a new DCI field. The new DCI field may be referred to as "cell DTX identifier" or "cell DRX identifier". The value of the DCI field may be applied for all of the cells.

For example, in a case where the cell DTX identifier is configured to be "1", the terminal 20 may dynamically activate the cell DTX for all of the cells. In addition, for example, in a case where the cell DTX identifier is configured to be "0", the terminal 20 may dynamically deactivate the cell DTX for all of the cells. For example, in a case where the cell DRX identifier is configured to be "1", the terminal 20 may dynamically activate the cell DRX for all of the cells. In addition, for example, in a case where the cell DRX identifier is configured to be "0", the terminal 20 may dynamically deactivate the cell DRX for all of the cells.

### <Option 1-2>

In a case where the cell DTX and the cell DRX are indicated together by using a common field, the cell DTX and the cell DRX may be activated or deactivated by using a new DCI field. The new DCI field may be referred to as "cell DTX DRX identifier". The value of the DCI field may be applied for all of the cells.

For example, in a case where the cell DTX DRX identifier is configured to be "01", the terminal 20 may dynamically activate the cell DTX for all of the cells and may dynamically deactivate the cell DRX for all of the cells. For example, in a case where the cell DTX DRX identifier is configured to be "10", the terminal 20 may dynamically activate the cell DRX for all of the cells and may dynamically deactivate the cell DTX for all of the cells. For example, in a case where the cell DTX DRX identifier is configured to be "11", the terminal 20 may dynamically activate the cell DTX and the cell DRX for all of the cells. For example, in a case where the cell DTX DRX identifier is configured to be "00", the terminal 20 may dynamically activate the cell DTX and the cell DRX for all of the cells. The above-described mapping of bits of the cell DTX and the cell DRX may be reversed.

### <Option 2>

In a case where the cell DTXs and/or DRXs for a plurality of cells are separately activated or deactivated, the following operation may be performed.

### <Option 2-1>

In a case where the cell DTX and the cell DRX are separately indicated by using separate fields, the cell DTX or the cell DRX may be activated or deactivated by using a new DCI field. The new DCI field may be referred to as "cell DTX identifier" or "cell DRX identifier". The bit length of the cell DTX identifier and the bit length of the cell DRX identifier are determined based on the number of cells in which cell DTX is configured and the number of cells in which cell DRX is configured, respectively.

For example, in a case where the cell DTX is configured for two cells, the bit length of the cell DTX identifier may be 2. Each bit corresponds to a corresponding cell. For example, in a case where the cell DTX identifier is "10", the terminal 20 may dynamically activate the cell DTX for cell #0 and may dynamically deactivate the cell DTX for cell #1. For example, in a case where the cell DRX identifier is "10", the terminal 20 may dynamically activate the cell DRX for cell #0 and may dynamically deactivate the cell DRX for cell #1.

### <Option 2-2>

In a case where the cell DTX and the cell DRX are indicated together by using a common field, the cell DTX and the cell DRX may be activated or deactivated by using a new DCI field. The new DCI field may be referred to as "cell DTX DRX identifier". The bit length of the cell DTX DRX identifier is determined based on the number of cells in which cell DTX is configured and the number of cells in which cell DRX is configured.

For example, in a case where the cell DTX and the cell DRX are configured for two cells, the bit length of the cell DTX DRX identifier may be 4. In other words, the bit length may be expected to be twice the number of cells.

Each bit of odd number may correspond to a state of cell DTX for a corresponding cell and each bit of even number may correspond to a state of cell DRX for a corresponding cell. In addition, each bit of even number may correspond to a state of cell DTX for a corresponding cell and each bit of odd number may correspond to a state of cell DRX for a corresponding cell.

For example, in a case where the cell DTX DRX identifier is "0111", the terminal 20 may dynamically deactivate the cell DTX and dynamically activate the cell DRX for cell #0 and may dynamically activate the cell DTX and dynamically activate the cell DRX for cell #1.

It is to be noted that which of the above-described embodiments is to be used may be configured by a higher layer parameter, may be reported as the UE capability from the terminal 20 to the base station 10, may be specified in the technical specification, or may be reported as the UE capability from the terminal 20 to the base station 10 and configured by a higher layer parameter or indicated by using DCI. The WUS (wake up signal) for the base station may be used for the cell DTX in addition to the cell DRX.

For example, in a case where the above-described higher layer parameter is configured, Option 1) may be performed, and in a case where the above-described higher layer parameter is not configured, Option 2) may be performed.

It is to be noted that the UE capability indicating whether or not the cell DTX and the cell DRX are supported may be defined. The UE capability indicating whether or not the dynamic activation or deactivation of the cell DTX and the cell DRX is supported may be defined. The UE capability indicating whether or not the cell DTX and the cell DRX accompanied by the UE DRX or CDRX is supported may be defined. The UE capability indicating whether or not the simultaneous execution of the cell DRX and the PUCCH cell switching is supported may be defined.

It is to be noted that the cell DTX/DRX may be substituted by the cell DTX and/or the cell DRX. The "activation/deactivation" may be substituted by "activation and/or deactivation".

According to an embodiment of the present invention, a technique of indicating, to the terminal, control information related to discontinuous transmission and reception by the base station is provided.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only proposed functions in one of the embodiments.

### <Base station 10>

Fig. 9 is a drawing illustrating an example of a functional configuration of the base station. As shown in Fig. 9, the base station 10 includes a transmission unit 110, a reception unit 120, a configuration unit 130, and a control unit 140. The functional configuration illustrated in Fig. 9 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, DL data, and the like to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 controls the entire base station 10 including, for example, control of signal transmission and reception. Note that the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

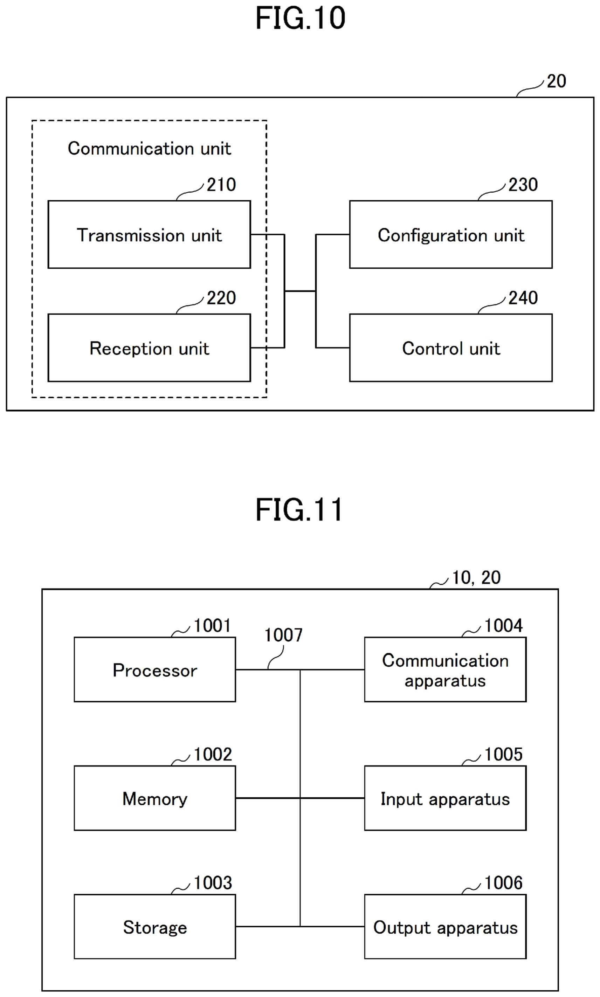

Fig. 10 is a drawing illustrating an example of a functional configuration of the terminal. As shown in Fig. 10, the terminal 20 includes a transmission unit 210, a reception unit 220, a configuration unit 230, and a control unit 240. The functional configuration illustrated in Fig. 10 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains higher layer signals from the received physical layer signals. In addition, the transmission unit 210 transmits HARQ-ACK, and the reception unit 220 receives configuration information described in the embodiment(s).

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20 including control related to signal transmission and reception. Note that the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

The terminal or base station according to an embodiment of the present invention may be configured as a terminal or a base station described in the following items. In addition, a communication method described below may be performed.

### <Configuration related to an embodiment of the present invention>

### (First item)

A terminal including:
a reception unit configured to receive, from a base station, control information related to a cell discontinuous transmission and reception function for activating or deactivating a transceiver unit; and
a control unit configured to perform transmission to and reception from the base station, based on the control information related to the cell discontinuous transmission and reception function, wherein
the reception unit receives a DCI (Downlink Control Information) format from the base station, and
the control unit activates or deactivates the cell discontinuous transmission and reception function, based on at least one of a plurality of blocks included in the DCI format.

### (Second item)

In the terminal as described in the first item,
the control unit expects that at least one of the plurality of blocks included in the DCI format is to be associated with the terminal itself.

### (Third item)

In the terminal as described in the first item,
the control unit activates or deactivates the cell discontinuous transmission and reception function, based on a DCI field included in at least one of the plurality of blocks included in the DCI format.

### (Fourth item)

In the terminal as described in the first item,
the control unit determines whether a DCI field for activating or deactivating a cell discontinuous transmission function or a cell discontinuous reception function is present or not based on a higher layer parameter, the DCI field being included in at least one of the plurality of blocks included in the DCI format. (Fifth item) In the terminal as described in the first item,
the control unit determines a starting position of each of the plurality of blocks included in the DCI format, based on a higher layer parameter.

### (6th item)

A communication method performed by a terminal, including:
receiving, from a base station, control information related to a cell discontinuous transmission and reception function for activating or deactivating a transceiver unit;
performing transmission to and reception from the base station, based on the control information related to the cell discontinuous transmission and reception function;
receiving a DCI (Downlink Control Information) format from the base station; and
activating or deactivating the cell discontinuous transmission and reception function, based on at least one of a plurality of blocks included in the DCI format.

According to any one of the above-described configurations, a technique of indicating, to the terminal, control information related to discontinuous transmission and reception by the base station is provided. According to the second item to the fifth item, activation/deactivation of the cell DTX/DRX of the target cell can be determined based on the information included in the DCI format.

### (Hardware structure)

The block diagrams that have been used to describe the above embodiments (Fig. 9 and Fig. 10) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

For example, the base station 10, the terminal 20, etc., according to an embodiment of the present disclosure may function as a computer for processing the radio communication method of the present disclosure. Fig. 11 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 9 may be implemented by control programs that are stored in the memory 1002 and that operate on the processor 1001. In addition, for example, the control unit 240 of the terminal 20 illustrated in Fig. 10 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

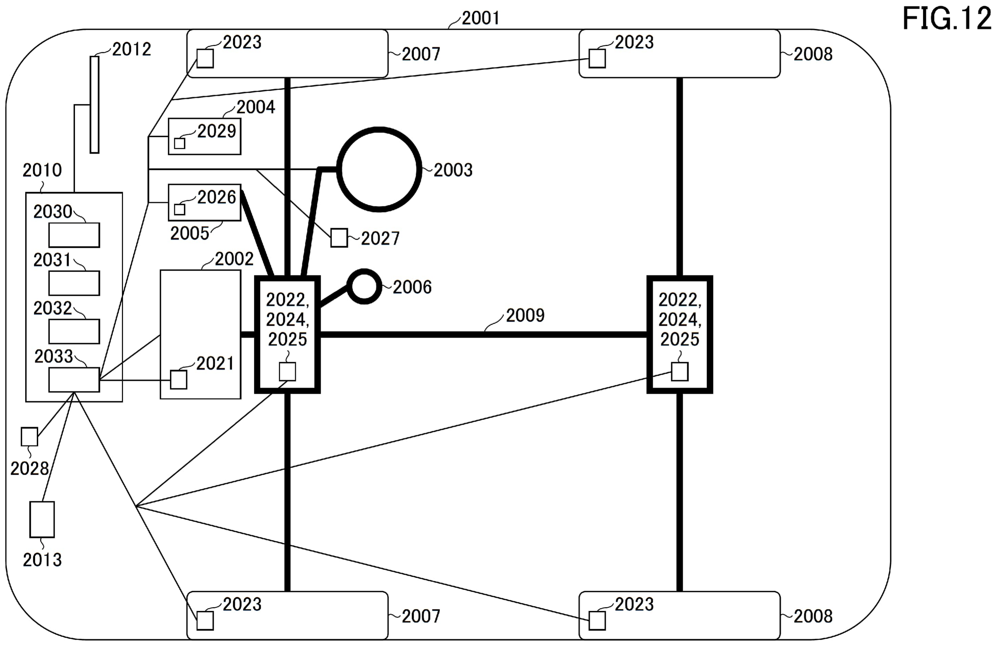

Fig. 12 shows an example of a configuration of a vehicle 2001. As shown in Fig. 12, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station may be a vehicle (e.g., a car, an airplane, etc.), an unmanned mobile body (e.g., a drone, an automated vehicle, etc.), or a robot (manned or unmanned). Note that at least one of a base station or a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for a terminal 20.

At least one of configured BWPs may be active, and a terminal 20 is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 1001: Processor
- 1002: Memory
- 1003: Storage
- 1004: Communication apparatus
- 1005: Input apparatus
- 1006: Output apparatus
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (IO port)

## Claims

1. A terminal comprising:
a reception unit configured to receive, from a base station, control information related to a cell discontinuous transmission and reception function for activating or deactivating a transceiver unit; and
a control unit configured to perform transmission to and reception from the base station, based on the control information related to the cell discontinuous transmission and reception function, wherein
the reception unit receives a DCI (Downlink Control Information) format from the base station, and
the control unit activates or deactivates the cell discontinuous transmission and reception function, based on at least one of a plurality of blocks included in the DCI format.

2. The terminal as claimed in claim 1, wherein
the control unit expects that at least one of the plurality of blocks included in the DCI format is to be associated with the terminal itself.

3. The terminal as claimed in claim 1, wherein
the control unit activates or deactivates the cell discontinuous transmission and reception function, based on a DCI field included in at least one of the plurality of blocks included in the DCI format.

4. The terminal as claimed in claim 1, wherein
the control unit determines whether a DCI field for activating or deactivating a cell discontinuous transmission function or a cell discontinuous reception function is present or not based on a higher layer parameter, the DCI field being included in at least one of the plurality of blocks included in the DCI format.

5. The terminal as claimed in claim 1, wherein
the control unit determines a starting position of each of the plurality of blocks included in the DCI format, based on a higher layer parameter.

6. A communication method performed by a terminal, the communication method comprising:
receiving, from a base station, control information related to a cell discontinuous transmission and reception function for activating or deactivating a transceiver unit;
performing transmission to and reception from the base station, based on the control information related to the cell discontinuous transmission and reception function;
receiving a DCI (Downlink Control Information) format from the base station; and
activating or deactivating the cell discontinuous transmission and reception function, based on at least one of a plurality of blocks included in the DCI format.
